# EUROPEAN PATENT APPLICATION

(11) **EP 4 697 532 A1**
(43) Date of publication of application: **18.02.2026**
(21) Application number: 25191420.6
(22) Date of filing: 23.07.2025
(51) Int. Cl.: H02J 1/08, H01R 13/66, H01R 31/06, H02J 7/00, H02J 7/02, H02J 50/00, H02J 7/70

(54) **WIRELESS TRANSMISSION EQUIPMENT AND POWER SUPPLY DEVICES THEREOF**

(30) Priority: 29.07.2024 US 202463676462 P; 04.07.2025 TW 114125360
(71) Applicant: WNC Corporation, Hsinchu 308 (TW)
(72) Inventor: SUN, Chia-Wei, 308 Hsinchu (TW); DANG, Lei-Wei, 308 Hsinchu (TW); LIAO, Jui-Ting, 308 Hsinchu (TW); HUANG, Bau-Yi, 308 Hsinchu (TW); CHANG, Feng-Ming, 308 Hsinchu (TW); WANG, Tien-Chu, 308 Hsinchu (TW)
(74) Representative: Ter Meer Steinmeister & Partner

(57) **Abstract**

A power supply device adapted to be connected to a first electronic device is provided. The power supply device includes a power supply device housing, an AC plug, a first connector and a second connector. The power supply device housing includes a first housing surface and a second housing surface. The first housing surface is different from the second housing surface. The AC plug protrudes from the first housing surface of the power supply device housing. The first connector protrudes from the second housing surface of the power supply device housing. The second connector also protrudes from the second housing surface of the power supply device housing. When the power supply device is connected to the first electronic device, the first connector and the second connector are simultaneously connected to the first electronic device.

## Description

This application claims priority of U.S. Provisional Patent Application Ser. No. 63/676,462, filed on July 29, 2024.

This application claims priority of Taiwan Patent Application No. 114125360, filed on Jul. 04, 2025.

Some references, which may include patents, patent applications and various publications, may be cited and discussed in the description of this disclosure. The citation and/or discussion of such references is provided merely to clarify the description of the present disclosure and is not an admission that any such reference is "prior art" to the disclosure described herein. All references cited and discussed in this specification are incorporated herein by reference in their entireties and to the same extent as if each reference was individually incorporated by reference.

### BACKGROUND OF THE INVENTION

### Field of the Invention

The present disclosure relates to a power supply device, and more particularly to a power supply device adapted for use with a wireless transmission device.

### Description of the Related Art

With the proliferation of wireless network equipment, various devices with wireless transmission functions, such as wireless routers and repeaters, are widely available on the market. To accommodate different usage scenarios and spatial constraints, the common approach in existing technology is to develop products with different industrial designs, such as desktop and wall-mounted types, according to different installation needs. Although these products can provide basic functions, they are relatively limited in flexibility and adaptability due to the constraint of a single installation method.

Moreover, in certain application scenarios, wireless devices need not only to receive network signals but also to supply power simultaneously. Therefore, there are devices on the market that can provide both Ethernet transmission and power delivery functions simultaneously, such as network power supply equipment that supports PoE (Power over Ethernet). However, most of these devices in existing technology are primarily designed in a single form, unable to simultaneously meet the diverse needs of desktop placement and wall-mounted installation.

Thus it is an object of the present invention to provide a power supply device being able to be installed on a desktop and also being able to be wall-mounted.

### BRIEF SUMMARY OF THE INVENTION

The object is solved by the features of the independent claims. Preferred embodiments are given in the dependent claims.

In response to the above-referenced technical inadequacies, an embodiment of the present disclosure provides a power supply device adapted to be connected to a first electronic device, comprising a power supply device housing, an AC plug, a first connector, and a second connector. The power supply device housing includes a first housing surface and a second housing surface, and the first housing surface is different from the second housing surface. The AC plug protrudes from the first housing surface of the power supply device housing. The first connector protrudes from the second housing surface of the power supply device housing. The second connector protrudes from the second housing surface of the power supply device housing, wherein when the power supply device is connected to the first electronic device, the first connector and the second connector simultaneously connect to the first electronic device.

In one or more embodiments, the first connector may be an Ethernet connector or a Power over Ethernet connector.

In one or more embodiments, the second connector may be a DC power connector.

In one or more embodiments, the power supply device may further comprise a third connector.

In one or more embodiments, the third connector may protrude from the second housing surface of the power supply device housing.

In one or more embodiments, the third connector may be an Ethernet connector or a Power over Ethernet connector.

In one or more embodiments, the first connector, the second connector, and the third connector may be aligned along a straight line.

In one or more embodiments, the second connector may be positioned between the first connector and the third connector.

In one or more embodiments, the power supply device may be adapted to be simultaneously connected to a second electronic device.

In one or more embodiments, the power supply device may further comprise a first port.

In one or more embodiments, the second electronic device may be adapted to be coupled to the first port.

In one or more embodiments, the first port may be an Ethernet port or a Power over Ethernet port.

In one or more embodiments, the power supply device may further comprise a first circuit board; an AC power supply unit disposed on the first circuit board, wherein the AC power supply unit is coupled to the AC plug; an AC to DC conversion module disposed on the first circuit board and coupled to the AC power supply unit; a second circuit board; a DC power supply unit disposed on the second circuit board.

In one or more embodiments, the DC power supply unit may be coupled to the AC to DC conversion module.

In one or more embodiments, the DC power supply unit may be also coupled to the second connector.

In one or more embodiments, a data processing unit may be disposed on the second circuit board.

In one or more embodiments, the data processing unit may be coupled to the first connector and the first port.

In one or more embodiments, the power supply device may further comprise a second port.

In one or more embodiments, the second electronic device may be adapted to be simultaneously connected to the first port and the second port, and the second port may be a DC power port, the DC power supply unit may be coupled to the second port.

In one or more embodiments, the power supply device may further comprise a latch.

In one or more embodiments, the latch may be disposed on the second housing surface and is adapted to be engaged with the first electronic device.

**In** another embodiment, the present disclosure provides a wireless transmission equipment, including a wireless transmission device and a power supply device. The wireless transmission device includes a wireless transmission device housing. The power supply device includes a power supply device housing, an AC plug, a first connector, and a second connector. The power supply device housing includes a first housing surface and a second housing surface, and the first housing surface is different from the second housing surface. The AC plug protrudes from the first housing surface of the power supply device housing. The first connector protrudes from the second housing surface of the power supply device housing. The second connector protrudes from the second housing surface of the power supply device housing, wherein when the power supply device is connected to the wireless transmission device, the first connector and the second connector simultaneously connect to the wireless transmission device.

In one or more embodiments, the wireless transmission device may comprise a first connection unit and a second connection unit.

In one or more embodiments, the first connector may be directly inserted into the first connection unit and the second connector is directly inserted into the second connection unit.

In one or more embodiments, the first connector may be an Ethernet connector or a Power over Ethernet connector.

In one or more embodiments, the first connector may comprise a first latch portion.

In one or more embodiments, the first latch portion may be adapted to be engaged with the first connection unit.

In one or more embodiments, the wireless transmission device housing may have an unlocking through-hole formed therein.

In one or more embodiments, the unlocking through-hole may be aligned with the first latch portion.

In one or more embodiments, the second connector may be a DC power connector.

In one or more embodiments, the power supply device housing may comprise a protruding rib.

In one or more embodiments, the protruding rib may be formed on the second housing surface.

In one or more embodiments, the wireless transmission device housing may have a positioning slot formed therein.

In one or more embodiments, the protruding rib may be adapted to pass through the positioning slot.

In one or more embodiments, the power supply device may further comprise a latch disposed on the second housing surface.

In one or more embodiments, the wireless transmission device housing may have has an engaging portion formed therein.

In one or more embodiments, the latch may be adapted to be engaged with the engaging portion.

In one or more embodiments, the latch may comprise a first engaging arm and a second engaging arm, and the first engaging arm and the second engaging arm extending from each other in an involute manner.

In one or more embodiments, the wireless transmission device housing may have a recessed portion formed therein.

In one or more embodiments, when the power supply device is connected to the wireless transmission device, part of the power supply device may be embedded within the recessed portion.

The power supply device of the embodiment of the present disclosure can be connected to a power socket on the wall and supply power to the wireless transmission device, enabling the wireless transmission device to provide wireless network signals. In another usage scenario, the power supply device of the embodiment of the present disclosure can connect to a power socket on the desktop and supply power to the wireless transmission device, enabling the wireless transmission device to provide wireless network signals. Additionally, the power supply device of the embodiment of the present disclosure can also connect a computer through a network cable, transmitting the wireless network signals provided by the wireless transmission device to the computer through the network cable, enhancing user convenience and flexibility in different environments.

### BRIEF DESCRIPTION OF THE DRAWINGS

The present invention can be more fully understood by reading the subsequent detailed description and examples with references made to the accompanying drawings, wherein:
FIG. 1 shows a power supply device according to an embodiment of the present disclosure;
FIG. 2 shows another perspective of the power supply device of the embodiment;
FIGS. 3A and 3B show the internal structure of the power supply device of the embodiment;
FIG. 4 shows a wireless transmission equipment of the embodiment of the present disclosure;
FIG. 5 shows the detailed structure of the wireless transmission device (first electronic device) of the embodiment of the present disclosure;
FIG. 6A shows a connection situation between the first connector and the first connection unit of the embodiment of the present disclosure;
FIG. 6B shows an unlocking through-hole of the embodiment of the present disclosure;
FIG. 6C shows the unlocking situation between the first connector and the first connection unit of the embodiment of the present disclosure;
FIG. 7 shows a power supply device of another embodiment of the present disclosure; and
FIG. 8 shows the situation of the power supply device combined with the wireless transmission device of another embodiment of the present disclosure.

### DETAILED DESCRIPTION OF THE INVENTION

The following description is made for the purpose of illustrating the general principles of the disclosure and should not be taken in a limiting sense. The scope of the disclosure is best determined by reference to the appended claims.

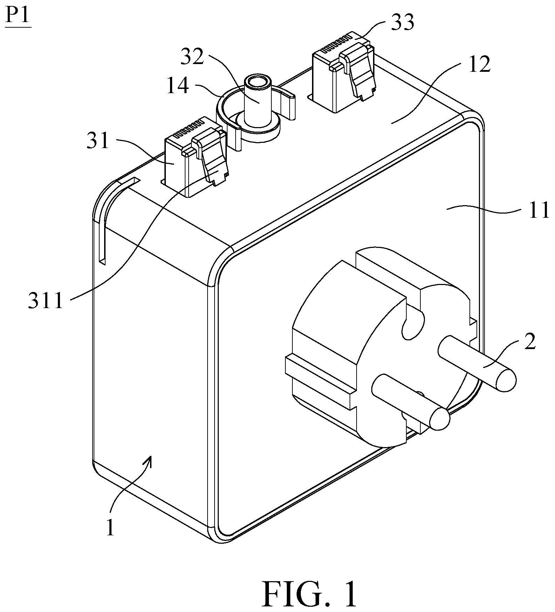

FIG. 1 shows a power supply device of an embodiment of the present disclosure. Referring to FIG. 1, the power supply device P1 of the embodiment of the present disclosure is adapted to be connected to a first electronic device (not shown). The power supply device P1 includes a power supply device housing 1, an AC plug 2, a first connector 31, and a second connector 32. The power supply device housing 1 includes a first housing surface 11 and a second housing surface 12, and the first housing surface 11 is different from the second housing surface 12. The AC plug 2 protrudes from the first housing surface 11 of the power supply device housing 1. The first connector 31 protrudes from the second housing surface 12 of the power supply device housing 1. The second connector 32 protrudes from the second housing surface 12 of the power supply device housing 1, wherein when the power supply device P1 is connected to the first electronic device (not shown), the first connector 31 and the second connector 32 simultaneously connect to the first electronic device (not shown).

Referring to FIG. 1, in one embodiment, the first connector 31 can be an Ethernet connector or a Power over Ethernet connector.

Referring to FIG. 1, in one embodiment, the second connector 32 can be a DC power connector. However, the above disclosure does not limit the present disclosure, and in another embodiment, the second connector 32 can also be other connectors with power supply capability, such as a Power over Ethernet connector.

In this embodiment, when the power supply device P1 is connected to the first electronic device (not shown), the first connector 31 and the second connector 32 simultaneously connect to the first electronic device (not shown). Thereby, the first connector 31 and the second connector 32 provide the effect of connection limitation.

Referring to FIG. 1, in one embodiment, the power supply device P1 further includes a third connector 33, wherein the third connector 33 protrudes from the second housing surface 12 of the power supply device housing 1, and the third connector 33 can be an Ethernet connector or a Power over Ethernet connector. When the power supply device P1 is connected to the first electronic device (not shown), the first connector 31, the second connector 32, and the third connector 33 simultaneously connect to the first electronic device (not shown). Thereby, the first connector 31, the second connector 32, and the third connector 33 provide the effect of connection limitation. In one embodiment, the aforementioned first electronic device (not shown) can be a wireless transmission device (e.g., wireless router), which can obtain DC power through the power supply device P1 and provide network signals to the power supply device P1.

Referring to FIG. 1, in one embodiment, the first connector 31, the second connector 32, and the third connector 33 are aligned along a straight line. The second connector 32 is positioned between the first connector 31 and the third connector 33. The above disclosure does not limit the present disclosure.

Referring to FIG. 1, in one embodiment, the first connector 31 includes a first latch portion 311. The first latch portion 311 is adapted to be engaged with the first electronic device (not shown).

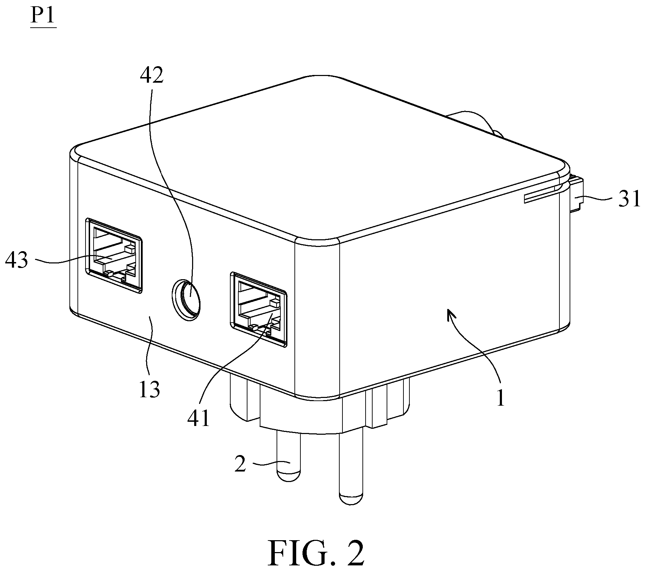

FIG. 2 shows another perspective of the power supply device of the embodiment of the present disclosure. Referring to FIG. 2, in one embodiment, the power supply device P1 is adapted to be simultaneously connected to a second electronic device (not shown), and the power supply device P1 further includes a first port 41, and the second electronic device (not shown) is adapted to be coupled to the first port 41. The first port 41 can be an Ethernet port or a Power over Ethernet port. In one embodiment, the power supply device housing 1 further includes a third housing surface 13. The third housing surface 13 is opposite to the second housing surface 12, and the first port 41 is disposed on the third housing surface 13.

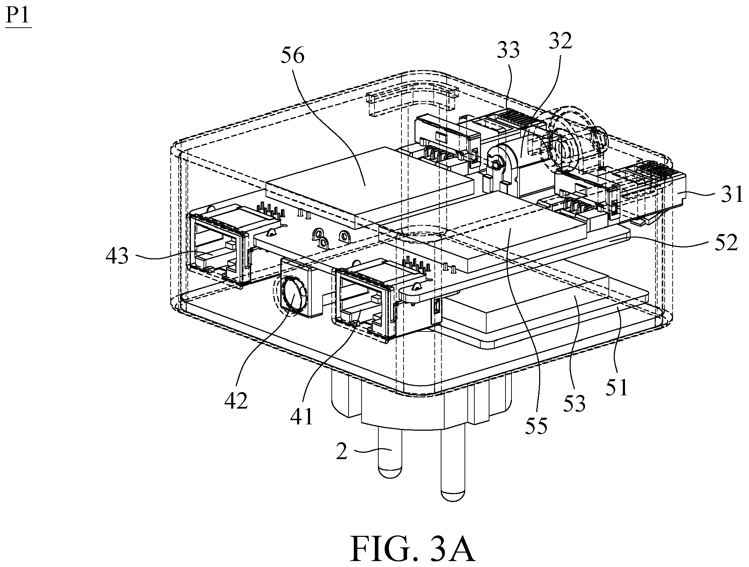

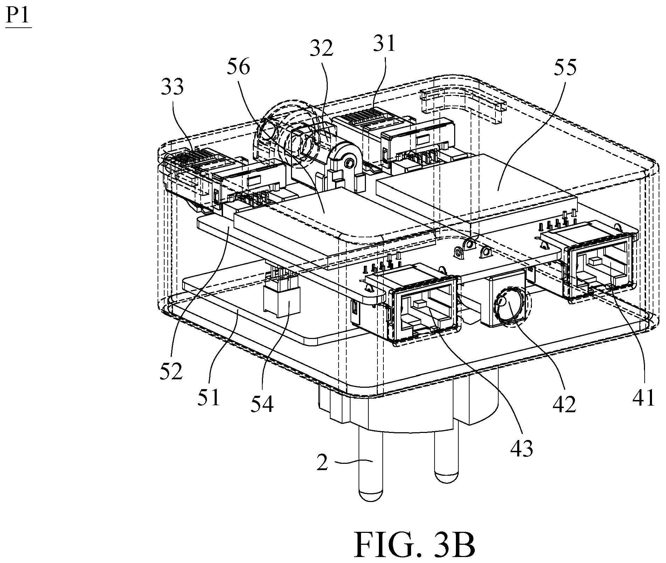

FIGS. 3A and 3B show the internal structure of the power supply device of the embodiment of the present disclosure. Referring to FIGS. 3A and 3B, in one embodiment, the power supply device P1 further includes a first circuit board 51, an AC power supply unit 53, an AC to DC conversion module 54, a second circuit board 52, a data processing unit 55, and a DC power supply unit 56. The AC power supply unit 53 is disposed on the first circuit board 51 and is coupled to the AC plug 2. The AC to DC conversion module 54 is disposed on the first circuit board 51 and is coupled to the AC power supply unit 53. The DC power supply unit 56 is disposed on the second circuit board 52, wherein the DC power supply unit 56 is coupled to the AC to DC conversion module 54, and the DC power supply unit 56 is also coupled to the second connector 32. The data processing unit 55 is disposed on the second circuit board 52, wherein the data processing unit 55 is coupled to the first connector 31 and the first port 41.

Referring to FIGS. 3A and 3B, in one embodiment, the power supply device P1 further includes a second port 42. The second electronic device (not shown) is adapted to be simultaneously connected to the first port 41 and the second port 42. The second port 42 can be a DC power port. The DC power supply unit 56 is coupled to the second port 42. In one embodiment, the power supply device P1 further includes a third port 43, and the data processing unit 55 coupled to the third port 43, wherein the third port 43 can be an Ethernet port or a Power over Ethernet por.

In one embodiment, the aforementioned second electronic device (not shown) can be a computer, and the second electronic device (not shown) is suitable for obtaining DC power and network signals through the power supply device P1.

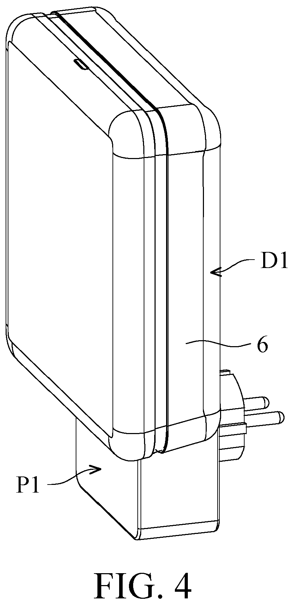

FIG. 4 shows a wireless transmission equipment of the embodiment of the present disclosure. Referring to FIG. 4, the wireless transmission equipment includes a wireless transmission device (first electronic device) D1 and a power supply device P1. The wireless transmission device D1 includes a wireless transmission device housing 6.

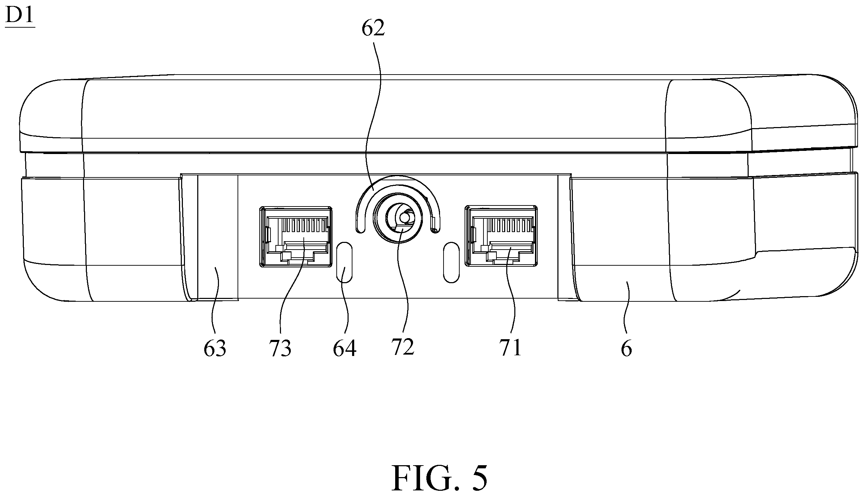

FIG. 5 shows the detailed structure of the wireless transmission device (first electronic device) of the embodiment of the present disclosure. Referring to FIGS. 1 and 5, in one embodiment, the wireless transmission device D1 includes a first connection unit 71 and a second connection unit 72. The first connector 31 can be directly inserted into the first connection unit 71 and the second connector 32 can be directly inserted into the second connection unit 72. As previously mentioned, the first connector 31 can be an Ethernet connector or a Power over Ethernet connector. The second connector 32 can be a DC power connector. The wireless transmission device D1 can further include a third connection unit 73, which can be used to connect with the third connector 33. The wireless transmission device D1 can obtain DC power through the power supply device P1 and provide network signals to the power supply device P1.

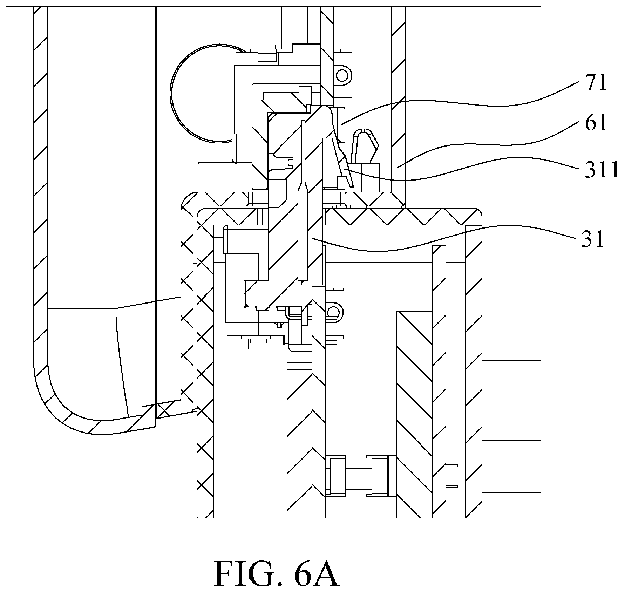

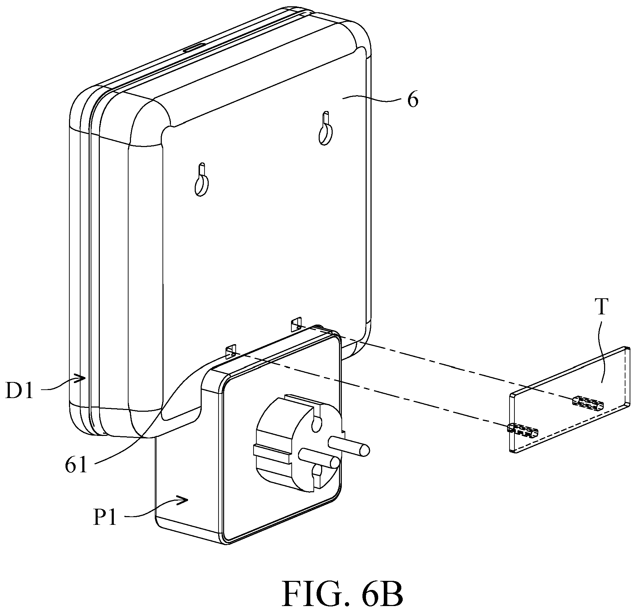

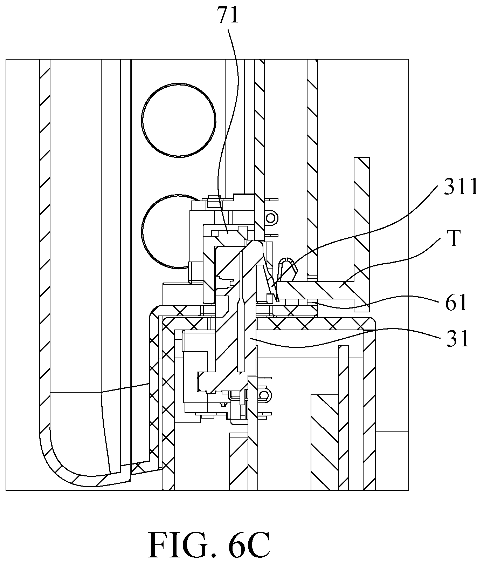

FIG. 6A shows a connection situation between the first connector and the first connection unit of the embodiment of the present disclosure. FIG. 6B shows an unlocking through-hole of the embodiment of the present disclosure. FIG. 6C shows the unlocking situation between the first connector and the first connection unit of the embodiment of the present disclosure. Referring to FIGS. 1, 6A, 6B, and 6C, in one embodiment, the first connector 31 includes a first latch portion 311, and the first latch portion 311 is adapted to be engaged with the first connection unit 71. In one embodiment, the wireless transmission device housing 6 has an unlocking through-hole 61 formed therein, and the unlocking through-hole 61 is aligned with to the first latch portion 311. An unlocking tool T can pass through the unlocking through-hole 61 and press the first latch portion 311, thereby achieving the unlocking function.

Referring to FIGS. 1 and 5, in one embodiment, the power supply device housing 1 includes a protruding rib 14, the protruding rib 14 is formed on the second housing surface 12, and the wireless transmission device housing 6 has a positioning slot 62 formed therein. The protruding rib 14 is adapted to pass through the positioning slot 62, thereby providing a positioning effect.

Referring to FIG. 1, in one embodiment, the protruding rib 14 surrounds at least part of the second connector 32.

Referring to FIGS. 4, 5, and 6A, in one embodiment, the wireless transmission device housing 6 has a recessed portion 63 formed therein, wherein when the power supply device P1 is connected to the wireless transmission device D1, part of the power supply device P1 is embedded within the recessed portion 63.

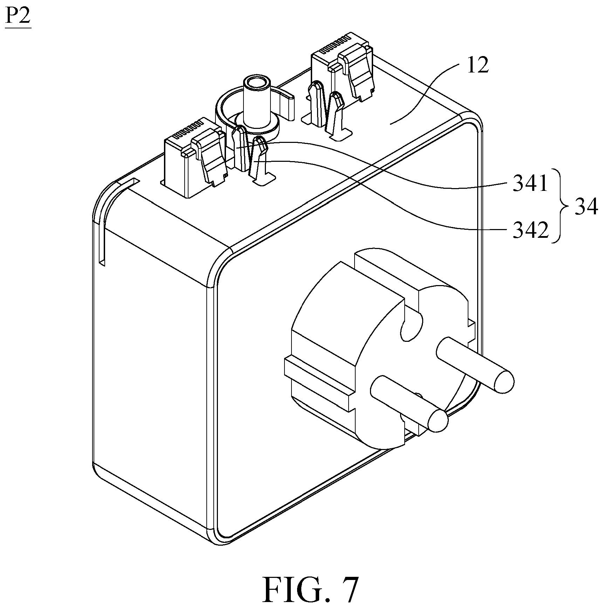

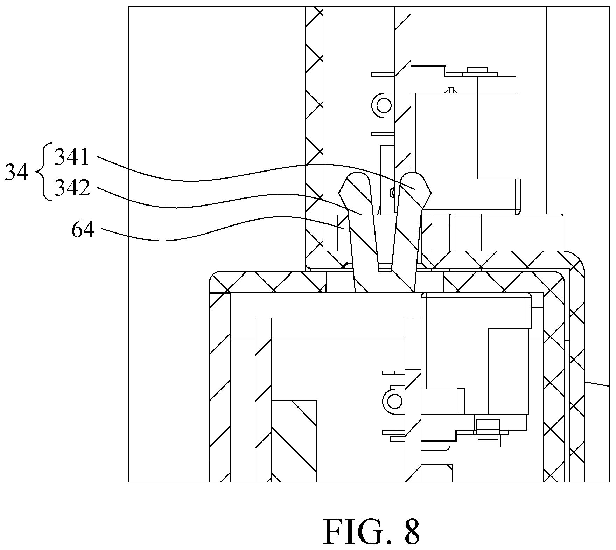

FIG. 7 shows a power supply device of another embodiment of the present disclosure. FIG. 8 shows the situation of the power supply device combined with the wireless transmission device of another embodiment of the present disclosure. Referring to FIGS. 5, 7, and 8, in one embodiment, the power supply device P2 further includes a latch 34, the latch 34 is disposed on the second housing surface 12, and the wireless transmission device housing 6 has an engaging portion 64 formed therein, and the latch 34 is adapted to be engaged with the engaging portion 64, thereby providing a limiting effect.

Referring to FIGS. 7 and 8, in one embodiment, the latch 34 includes a first engaging arm 341 and a second engaging arm 342, the first engaging arm 341 and the second engaging arm 342 extend from each other in an involute manner. In one embodiment, if a user wants to separate the wireless transmission device D1 and the power supply device P2, they only need to pull the wireless transmission device D1 upward to unlock the latch 34.

The power supply device of the embodiment of the present disclosure can connect to a power socket on the wall and supply power to the wireless transmission device, enabling the wireless transmission device to provide wireless network signals. In another usage scenario, the power supply device of the embodiment can connect to a power socket on the desktop and supply power to the wireless transmission device, enabling the wireless transmission device to provide wireless network signals. Additionally, the power supply device of the embodiment of the present disclosure can also connect a computer through a network cable, transmitting the wireless network signals provided by the wireless transmission device to the computer through the network cable, enhancing user convenience and flexibility in different environments.

Although the present disclosure has been disclosed above with specific preferred embodiments, it is not intended to limit the present disclosure. A person skilled in the art can still make some modifications and refinements without departing from the spirit and scope of the present disclosure. Therefore, the protection scope of the present disclosure should be defined by the claims below.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its scope.

## Claims

1. A power supply device (P1), adapted to be connected to a first electronic device, comprising:
a power supply device housing (1), including a first housing surface (11) and a second housing surface (12), wherein the first housing surface (11) is different from the second housing surface (12);
an AC plug (2) protruding from the first housing surface (11) of the power supply device housing (1);
a first connector (31) protruding from the second housing surface (12) of the power supply device housing (1); and
a second connector (32) protruding from the second housing surface (12) of the power supply device housing (1),
wherein when the power supply device (P1) is connected to the first electronic device, the first connector (31) and the second connector (32) simultaneously connect to the first electronic device.

2. The power supply device according to claim 1, wherein the first connector (31) is an Ethernet connector or a Power over Ethernet connector.

3. The power supply device according to claim 1 or 2, wherein the second connector (32) is a DC power connector.

4. The power supply device according to any one of the claims 1, 2 or 3, wherein the power supply device (P1) further comprises a third connector (33), wherein the third connector (3) protrudes from the second housing surface (12) of the power supply device housing (1), and the third connector (33) is an Ethernet connector or a Power over Ethernet connector.

5. The power supply device according to claim 4, wherein the first connector (31), the second connector (32), and the third connector (33) are aligned along a straight line, and the second connector (32) is positioned between the first connector (31) and the third connector (33).

6. The power supply device according to any one of the preceding claims, wherein the power supply device is adapted to be simultaneously connected to a second electronic device, and the power supply device (P1) further comprises a first port (41), the second electronic device is adapted to be coupled to the first port (41), and the first port (41) is an Ethernet port or a Power over Ethernet port.

7. The power supply device according to claim 6, further comprising:
a first circuit board (51);
an AC power supply unit (53) disposed on the first circuit board (51), wherein the AC power supply unit (53) is coupled to the AC plug (2);
an AC to DC conversion module (54) disposed on the first circuit board (51) and coupled to the AC power supply unit (53);
a second circuit board (52);
a DC power supply unit (56) disposed on the second circuit board (52), wherein the DC power supply unit (56) is coupled to the AC to DC conversion module (54), and the DC power supply unit (56) is also coupled to the second connector (32); and
a data processing unit (55) disposed on the second circuit board (52), wherein the data processing unit (55) is coupled to the first connector (31) and the first port (41).

8. The power supply device according to claim 7, further comprising a second port (42), the second electronic device is adapted to be simultaneously connected to the first port (41) and the second port (42), and the second port (42) is a DC power port, the DC power supply unit (56) is coupled to the second port (42).

9. The power supply device according to any one of the preceding claims, further comprising a latch (34), wherein the latch (34) is disposed on the second housing surface (12) and is adapted to be engaged with the first electronic device.

10. A wireless transmission equipment, comprising: a wireless transmission device (D1), including a wireless transmission device housing (6); and a power supply device (P1), comprising:
a power supply device housing (1), including a first housing surface (11) and a second housing surface (12), wherein the first housing surface (11) is different from the second housing surface (12);
an AC plug (2) protruding from the first housing surface (11) of the power supply device housing (1);
a first connector (31) protruding from the second housing surface (11) of the power supply device housing (1); and
a second connector (32) protruding from the second housing surface (12) of the power supply device housing (1), wherein when the power supply device (P1) is connected to the wireless transmission device (D1), the first connector (31) and the second connector (32) are simultaneously connected to the wireless transmission device (D1).

11. The wireless transmission equipment according to claim 10, wherein the wireless transmission device (D1) comprises a first connection unit (71) and a second connection unit (/2), the first connector (31) is directly inserted into the first connection unit (71) and the second connector (32) is directly inserted into the second connection unit (72), wherein the first connector (31) is an Ethernet connector or a Power over Ethernet connector.

12. The wireless transmission equipment according to claim 11, wherein the first connector (31) comprises a first latch portion (311), and the first latch portion (311) is adapted to be engaged with the first connection unit (71), wherein the wireless transmission device housing (6) has an unlocking through-hole (61) formed therein, and the unlocking through-hole (61) is aligned with the first latch portion (311).

13. The wireless transmission equipment according to claim 11 or 12, wherein the second connector (32) is a DC power connector, and the power supply device housing (1) comprises a protruding rib (14), the protruding rib (14) formed on the second housing surface (12), and the wireless transmission device housing (6) has a positioning slot (62) formed therein, the protruding rib (14) is adapted to pass through the positioning slot (62).

14. The wireless transmission equipment according to any one of claim 11, 12 or 13 wherein the power supply device (P1) further comprises a latch (34) disposed on the second housing surface (12), and the wireless transmission device housing (6) has an engaging portion (64) formed therein, and the latch (34) is adapted to be engaged with the engaging portion (64), wherein the latch (34) comprises a first engaging arm (341) and a second engaging arm (342), and the first engaging arm (341) and the second engaging arm (342) extending from each other in an involute manner.

15. The wireless transmission equipment according to any one of claim 11, 12, 13 or 14, wherein the wireless transmission device housing (6) has a recessed portion (63) formed therein, wherein when the power supply device (p1) is connected to the wireless transmission device (D1), part of the power supply device (P1) is embedded within the recessed portion (63).
